Europäisches Patentamt

European Patent Office

Office européen des brevets

(11) Veröffentlichungsnummer: **0 310 967 B1**

(12) **EUROPÄISCHE PATENTSCHRIFT**

(45) Veröffentlichungstag der Patentschrift: **22.04.92**

(21) Anmeldenummer: **88116240.8**

(22) Anmeldetag: **30.09.88**

(51) Int. Cl.⁵: **B23Q 3/10**

(54) **Haltevorrichtung.**

(30) Priorität: **02.10.87 DE 3733356**
**06.11.87 DE 3737672**

(43) Veröffentlichungstag der Anmeldung:
**12.04.89 Patentblatt  89/15**

(45) Bekanntmachung des Hinweises auf die
Patenterteilung:
**22.04.92 Patentblatt  92/17**

(84) Benannte Vertragsstaaten:
**AT BE CH DE ES FR GB GR IT LI LU NL SE**

(56) Entgegenhaltungen:
**EP-A- 0 232 485**
**DE-A- 2 309 332**
**FR-A- 2 090 119**
**GB-A- 1 263 474**
**US-A- 4 143 868**

(73) Patentinhaber: **Schanz, Manfred**
**Talstrasse 4**
**W-7860 Schopfheim(DE)**

(72) Erfinder: **Schanz, Manfred**
**Talstrasse 4**
**W-7860 Schopfheim(DE)**

(74) Vertreter: **Schmitt, Hans, Dipl.-Ing. et al**
**Patentanwälte Dipl.-Ing H. Schmitt Dipl.-Ing.**
**W. Maucher Dreikönigstrasse 13**
**W-7800 Freiburg(DE)**

## Beschreibung

Die Erfindung betrifft eine Haltevorrichtung zum Festspannen einer Formplatte od.dgl. Platte, die Säulen- oder Koordinatenbohrungen aufweist, während der Bearbeitung auf einer spanabhebenden Werkzeugmaschine, wobei die Haltevorrichtung eine Grundspannplatte sowie daran befestigt wenigstens zwei in Bohrungen des Werkstückes eingreifende, ein Innenteil und ein Außenteil aufweisende Spannelemente hat, die durch eine axiale Bewegung und mittels Konusflächen radial und konzentrisch aufweitbar sind.

Zum Festspannen einer zu bearbeitenden Formplatte wird diese z. B. auf einen Fräsmaschinentisch aufgelegt und nach einem Grobausrichten in Längsrichtung mit Spannpratzen noch verschiebbar festgehalten. Das genaue Lageausrichten erfolgt mit Hilfe einer Meßuhr, mit der zwei Säulen- oder Koordinatenbohrungen angetastet werden. Dieser Ausrichtvorgang ist auch wegen der hohen Anforderungen an die Lagegenauigkeit der Formplatte od.dgl. Werkstück sehr zeitintensiv und u.a. auch von der jeweiligen Bedienperson abhängig. Hinzu kommt noch, daß die Bohrungen selbst Durchmessertoleranzen haben können, so daß trotz genauem Ausrichten eine Schräglage der Formplatte vorhanden sein kann.
Nach dem Ausmessen und Ausrichten werden die Spannpratzen angezogen und anschließend muß nochmals nachgemessen und gegebenenfalls auch nochmals nachgerichtet werden. Dann wird eine Bohrung als Koordinatenbezugspunkt in die Koordinaten der Bearbeitungsmaschine übernommen.
Von dieser Koordinate wird die Formplattenmitte eingefahren und die X-Y Achse genullt.
Die gesamte vorbeschriebene Prozedur muß bei einer Serienfertigung von Formplatten bei jeder zu bearbeitenden Formplatte vorgenommen werden. Dadurch ergeben sich insgesamt erhebliche Rüstzeiten und auch eine nicht unerhebliche Fehlermöglichkeit.

Aus der DE-OS 17 77 007 ist bereits eine Haltevorrichtung der eingangs erwähnten Art mit einer Grundspannplatte mit daran anbringbaren, radial aufweitbaren Spannelementen zum Halten eines Werkstückes bekannt. Für eine präzise Halterung eines Werkstückes, wie sie insbesondere im Formenbau, aber auch im allgemeinen Werkzeugbau gefordert ist, ist jedoch das verwendete Spannelement weder in Seitenrichtung noch in Richtung zu einer Auflage hin geeignet.

Die DE-OS 23 09 332 zeigt eine Haltevorrichtung mit einem Spannelement insbesondere zum Halten von Zahnrädern bei einer Bearbeitung. Das dafür vorgesehene Spannelement läßt sich jedoch nur für insbesondere rotationssymmetrische Körper, wie z.B. Zahnräder mit einer zentralen Aufnahmebohrung einsetzen. Positionierprobleme wie beim Einspannen und Umspannen insbesondere von Formplatten od.dgl. treten hier nicht auf. Auch kann ein Werkstück nicht einfach nach einer Teilbearbeitung abgenommen und dann ohne Richt- und Meßaufwand wieder positionsgenau eingespannt werden, da die Drehlage nicht fixiert ist.

In der älteren, nicht vorveröffentlichten EP-A-0 275 923 (Stand der Technik nach Art. 54(3)EPU) ist anhand der Figur 3 ein Spannelement beschrieben, welches eine Spannschraube aufweist, mittels der das Spannelement direkt an einem Maschinentisch befestigt werden kann. Gleichzeitig dient sie auch zum Expandieren des Spannelementes und somit seinem Verbinden mit einem Werkstück.
Ein Umspannen eines Werkstückes praktisch ohne Positionierfehler ist damit nicht möglich, da beim Lösen des Werkstückes gleichzeitig auch dessen Halterung im Maschinentisch gelöst wird.
Nach dem Lösen der Spannschraube ist bei dieser Anordnung auch nicht sichergestellt, daß die Konusklemmverbindung sich ebenfalls löst, so daß unter Umständen durch Klopfen oder Abhebeln ein Lösen des Werkstückes vorgenommen werden muß. Dies kann jedoch zu unerwünschten Lageverschiebungen führen, so daß auch dadurch ein präzises Umspannen nicht möglich ist.

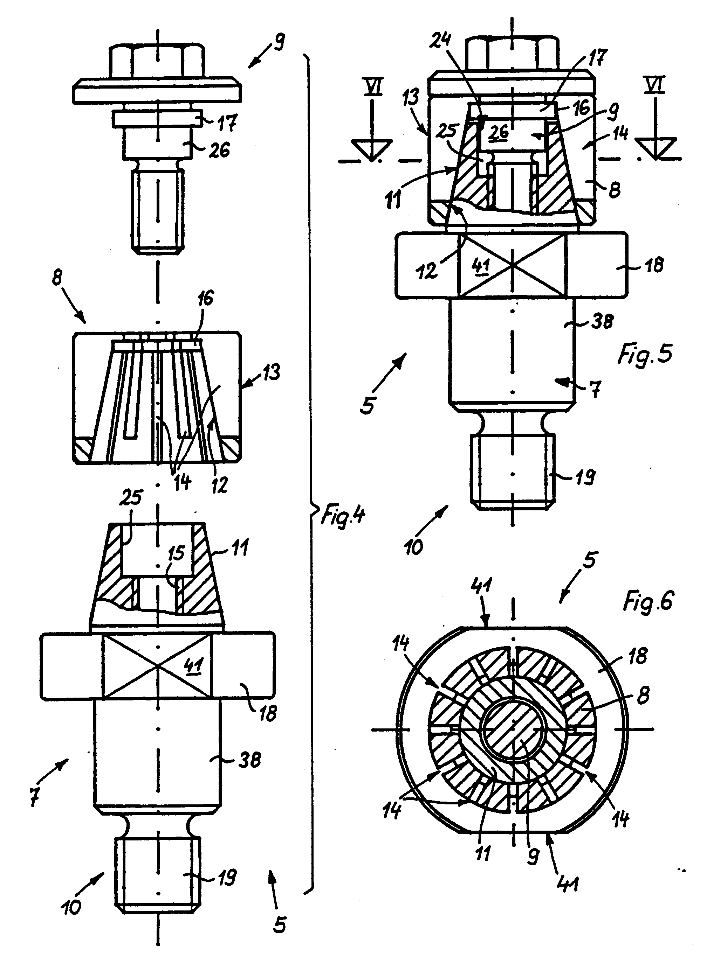

Die Figuren 5 und 6 zeigen eine Grundspannplatte, welche Nuten zur Aufnahme von Ausrichtelementen sowie von z.B. eine Formplatte haltenden Spannkloben aufweist. Diese Befestigungsart ist vergleisweise umständlich und hinsichtlich der Positionierpräzision noch verbesserungsfähig.

Aufgabe der vorliegenden Erfindung ist es, eine Haltevorrichtung der eingangs erwähnten Art zu schaffen, mittels der ein schnelles und gleichzeitig präzises Festspannen und auch Umspannen eines Werkstückes, insbesondere einer Formplatte od.dgl. mit hoher Lagewiederholgenauigkeit möglich ist. Dabei sollen insbesondere die Rüstzeiten reduziert und die Positioniergenauigkeit erhöht sein, so daß insbesondere auch bei Serienfertigungen insgesamt geringe Durchlaufzeiten erreicht werden können.

Zur Lösung dieser Aufgabe wird erfindungsgemäß insbesondere vorgeschlagen, daß die Befestigungsstellen in der Grundspannplatte als Paßöffnungen mit sich daran anschließender Gewindebohrung ausgebildet sind, in welche die Spannelemente mit einem Gewindeabschnitt sowie einem Paßteil einsetzbar sind, daß sich an das Paßteil ein Ringbund einstückig anschließt, über den ein Außenkonusteil vorsteht, und daß zum Halten und axialen Verstellen des Außenteiles des Spannelementes eine Schraubverbindung vorgesehen ist, deren mittels ihres Gewindes zum Spannen und Lösen bewegbares Teil in beiden axialen Bewegungsrichtungen mit dem Außenteil formschlüssig verbunden ist.

Durch diese Haltevorrichtung genügt ein einmaliges Ausrichten der Grundspannplatte und die dann von ihr nacheinander gehaltenen Formplatten od.dgl. Werkstücke sind dann exakt in jeweils gleicher Lage positionierbar. In vorteilhafter Weise wirken sich dabei auch Maßtoleranzen der Koordinatenbohrungen nicht nachteilig aus, da durch die radial und gleichmäßig am Umfang aufweitbaren Spannelemente praktisch eine Selbstzentrierung eintritt. Die besondere Ausbildung der Verbindung zwischen den Spannelementen und der Grundspannplatte ergibt eine präzise Lagerung und auch Halterung der Spannelemente, die dann in der Art von Stehbolzen vorstehen und beim Wechsel eines Werkstückes ihre exakte Lage beibehalten und somit die Voraussetzung für eine entsprechend präzise Lagerung eines Werkstückes schaffen. Die axiale Verbindung des Spannelement-Außenteiles mit dem bewegbaren Teil der Verschraubung ermöglicht ein Lösen der Verbindung ohne die Präzision beeinflussende Hilfsmittel.

Vorteilhafterweise weist die Grundspannplatte wenigstens eine Einmeß-Bohrung auf. Mit Hilfe dieser Einmeß-Bohrung können die Maschinenkoordinaten auf einfache Weise genullt werden, so daß ein lageexaktes Aufspannen insgesamt vergleichsweise einfach durchgeführt werden kann.
Nach einer Weiterbildung der Erfindung ist vorgesehen, daß die Grundspannplatte mehrere Befestigungsstellen zum Befestigen von Spannelementen in unterschiedlichen Abständen voneinander aufweist.

Dadurch kann die Grundspannplatte zum Bearbeiten von Werkstücken mit unterschiedlichen Abständen ihrer Säulenbohrungen eingesetzt werden.

Zweckmäßigerweise weist die Grundspannplatte über ihre Unterseite vorstehende Lagefixiervorsprünge, insbesondere zum Eingreifen in Spann-Nuten oder Referenzbohrungen eines Werkzeugmaschinentisches auf. Dadurch ist die Grundspannplatte nach dem Aufsetzen auf den Werkzeugmaschinentisch zumindest in Querrichtung fixiert und kann dann bei in Spann-Nuten eingreifenden Lagefixiervorsprüngen in Längsrichtung ausgerichtet werden. Wenn der Werkzeugmaschinentisch bereits Referenzbohrungen aufweist, hat die Grundspannplatte bereits beim Aufsetzen und Eingreifen der Lagefixiervorsprünge in diese Referenzbohrungen, ihre exakte Positionierlage.

Besonders vorteilhaft ist es, wenn der Außenkonusteil des Spannelementes einstückig mit dem Paßteil sowie dem Ringbund verbunden ist. Ein mit der Grundspannplatte verbundenes Spannelement bildet dadurch einen stabilen und exakt festgelegten Bezugs- und Befestigungspunkt für ein Werkstück, wobei auch bei Bearbeitungsbelastungen diese exakte Lage beibehalten bleibt.

Eine Ausführungsform sieht vor, daß das Außenkonusteil an seinem dem Befestigungsende des Spannelementes abgewandten freien Ende einen sich zu diesem verjüngenden Außenkonus und die Spannhülse einen entsprechenden Innenkonus hat und daß die Spannhülse durch Verschieben in axialer Richtung zum Befestigungsende hin radial aufweitbar ist.
Während des Festspannens ergibt sich durch das sich dabei zum Befestigungsende hin bewegende Außenkonusteil, welcher außenseitig zunehmend kraft- bzw. reibschlüssig an der Wandung der Koordinatenbohrung anliegt, ein Niederzugeffekt, so daß das festzuspannende Werkstück dabei nicht nur zentriert sondern auch noch in erwünschter Weise gegen eine es zu unterstützende Auflage gezogen wird. Dadurch wird auch in der dritten Koordinatenrichtung jeweils ein exaktes Positionieren beim Festspannen und Halten des Werkstückes erreicht.

Nach einer Weiterbildung der Erfindung ist vorgesehen, daß die Grundspannplatte Basisplatte einer oder mehrerer Palettenplatten ist und daß die Palettenplatte(n) vorzugsweise durch Koordinatenbohrungen gebildete Befestigungsstellen für Aufspannteile, z.B. einen Schraubstock, eine Magnetspannplatte, Erodierelektroden od.dgl. aufweist (aufweisen). Palettenplatten mit unterschiedlichen, darauf befindlichen Vorrichtungen z.B. für häufig wiederkehrende Bearbeitungen, können dadurch koordinatengerecht auf die Grundspannplatte aufgesetzt und befestigt werden, ohne daß dabei die sonst erforderlichen Ausricht- bzw. Nachrichtarbeiten erforderlich wären. Es ist dadurch gut auch ein automatisches Zuführen von Werkstücken zu Bearbeitungsmaschinen bei gleichzeitig hoher Positioniergenauigkeit möglich.

Besonders vorteilhaft ist es, wenn der sich an das Paßteil des Spannelementes anschließende Gewindeabschnitt Radialspiel zu dem Paßteil hat. Bezüglich der exakten Lage des Spannelementes ist dadurch keine Überbestimmung vorhanden, sondern das Paßteil übernimmt hierbei, unbeeinflußt von der Gewindeverbindung, die Führungsfunktion für eine exakte und wiederholbare Positionierlage des Spannelementes.

Nach einer abgewandelten Ausführungsform der Erfindung ist vorgesehen, daß ein Spannelement in unveränderbarer Position, vorzugsweise nahe in einem Eckbereich der Grundspannplatte und weitere Spannelemente in unterschiedlichen Positionen an der Grundspannplatte anbringbar sind. Zum einen ist dadurch ein fester Bezugspunkt durch das unveränderbare Spannelement vorhanden und durch die Anordnung im Eckbereich der Grundspannplatte steht für das oder die weiteren Spannelemente die gesamte Fläche der Grundspannplatte zur Verfügung.

Eine vorteilhafte Ausführungsform sieht dabei vor, daß bei vier Spannelementen eines unverändert in einem Eckbereich der Grundspannplatte, zwei in kantenparallelen, von diesem Eckbereich ausgehenden Längsführungen verstellbar und das vierte Spannelement innerhalb der Grundspannplatten-Ebene verstellbar angeordnet sind. Einerseits erhält man dadurch eine gute Ausnützung der zur Verfügung stehenden Fläche der Grundspannplatte und andererseits sind durch die Anordnung von drei Spannelementen im randnahen Bereich der Grundspannplatte diese auch von unten her zum Befestigen gut zugänglich.

Zweckmäßig ist es dabei, wenn das vierte Spannelement von der Oberseite der Grundspannplatte zugängliche Befestigungsstellen aufweist, vorzugsweise seinen Ringbund durchgreifende und in Gewindebohrungen der Grundspannplatte einschraubbare Befestigungsschrauben. Dies ist insbesondere bei geringen Säulenbohrungsabständen eines zu bearbeitenden Werkstückes vorteilhaft, da hier das vierte Spannelement etwa im Bereich der Mitte der Grundspannplatte zu liegen kommt, so daß eine Zugänglichkeit von der Unterseite zum Befestigen nicht ohne weiteres gegeben ist.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen in Ausführungsbeispielen näher beschrieben.

Es zeigt:

Fig. 1 eine zum Teil im Schnitt gehaltene Seitenansicht einer Haltevorrichtung im Bereich eines Spannelementes,

Fig. 2 eine Aufsicht der in Fig. 1 gezeigten Anordnung ohne gehaltenes Werkstück,

Fig. 3 eine perspektivische Ansicht einer auf einen Werkzeugmaschinentisch aufgelegten Haltevorrichtung,

Fig. 4 eine auseinandergezogene Darstellung der zu einem Spannelement gehörenden Teile,

Fig. 5 eine teilweise im Schnitt gehaltene Seitenansicht eines Spannelementes,

Fig. 6 eine Schnittdarstellung eines Spannelementes entsprechend der Schnittlinie VI - VI in Fig. 5,

Fig. 7 eine Aufsicht einer Grundspannplatte mit Befestigungsstellen für in unterschiedlichen Abständen zueinander anbringbaren Spannelementen,

Fig. 8 eine Aufsicht einer Grundspannplatte mit zum Teil stufenlos positionierbaren Spannelementen,

Fig. 9 eine Stirnseitenansicht der in Fig. 8 gezeigten Grundspannplatte,

Fig. 10 eine Aufsicht einer abgewandelten Ausführungsform einer Grundspannplatte und

Fig. 11 eine zum Teil im Schnitt gehaltene Stirnseitenansicht der in Fig. 10 gezeigten Grundspannplatte.

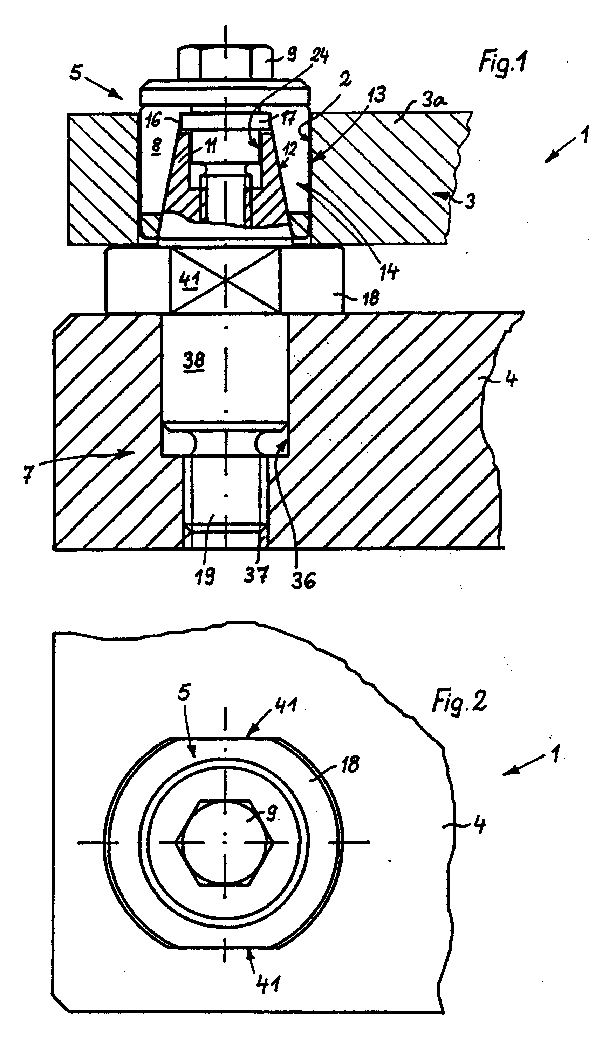

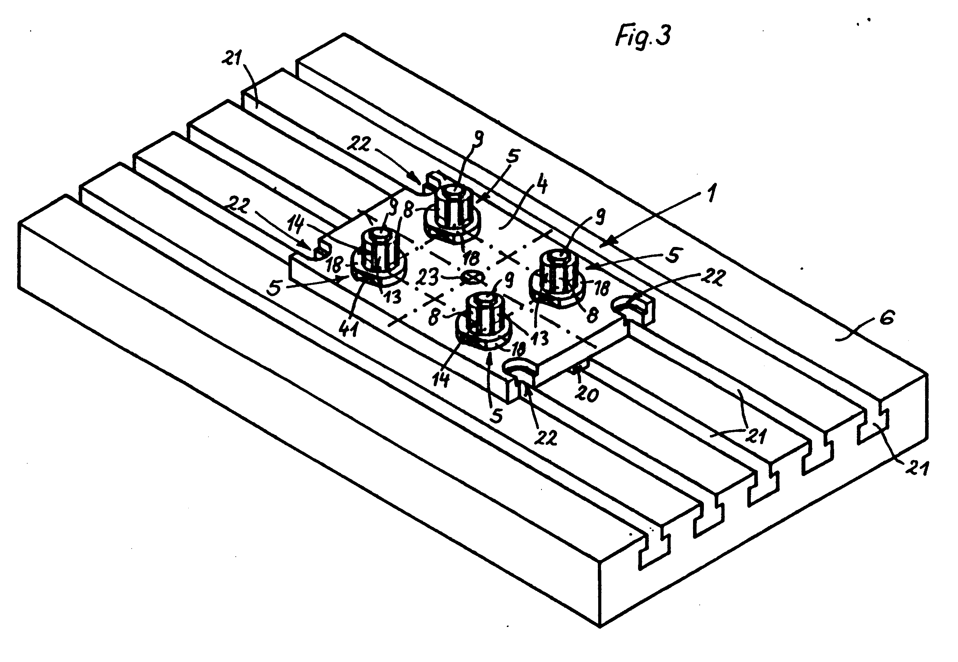

Eine Haltevorrichtung 1 (Fig. 1 und 3) dient zum Festspannen eines eine oder mehrere Säulen- oder Koordinaten-Bohrungen 2 aufweisenden Werkstückes 3 (Fig. 1) während der Bearbeitung auf einer Werkzeugmaschine. Bei der Bearbeitung kann es sich um Bohren, Fräsen, Drehen oder Senk- und Drahterodieren handeln. Bevorzugt dient die Haltevorrichtung zum Festspannen von Formplatten 3a.

Das auch in den Figuren 1, 4 bis 6 erkennbare Spannelement besteht im wesentlichen aus einem Befestigungsteil 7, einer hutartig darüber greifenen Spannhülse 8 sowie einer Spannschraube 9 (Fig. 4).

Das Befestigungsteil 7 hat an seinem dem Befestigungsende 10 abgewandten freien Ende einen sich verjüngenden Außenkonus 11. Auf diesen Außenkonus 11 ist die Spannhülse 8 aufsetzbar und sie weist einen zum Außenkonus 11 passenden Innenkonus 12 auf.

Die Spannhülse 8 bildet das radial aufweitbare Teil des Spannelementes 5 und sie ist dazu in axialer Richtung geschlitzt ausgebildet. Um hierbei die äußeren Klemmflächen 13 parallel zu halten, weist die Spannhülse 8 in Umfangsrichtung abwechselnd von den beiden Stirnseiten ausgehende Längsschlitze 14 auf. In den Figuren 4 und 6 ist dabei erkennbar, daß die Schlitze 14 jeweils an einer Stirnseite hin randoffen und zur anderen Stirnseite hin geschlossen, also nicht durchgehend ausgebildet sind.

Die Spannschraube 9 durchgreift in Funktionsstellung die Spannhülse 8 und ist in eine Gewindebohrung 15 des Befestigungsteiles 7 eingeschraubt. Sie ist mit der Spannhülse 8 in axialer Richtung verbunden, läßt sich jedoch gegenüber der Spannhülse 8 verdrehen. Dazu weist die Spannhülse 8 am oberen, engeren Ende ihres Innenkonus 12 eine Innenringnut 16 und die Spannschraube 9 im kopfnahen Bereich einen entsprechenden, in die Ringnut 16 eingreifenden Ringansatz 17 auf. Beim Lösen der Spannschraube 9 nimmt diese die Spannhülse 8 mit, so daß ohne Einsatz von Hilfswerkzeugen ein Lösen der Spannverbindung möglich ist. Es bleibt dadurch insbesondere auch die präzise Lage der Spannelemente unbeeinflußt.

Durch die auch von oben geschlitzte Spannhülse 8 kann diese zum Einsetzen des Ringansatzes 17 radial etwas aufgeweitet werden. Die Spannschraube 9 ist dann, wie in Fig. 1 und 5 erkennbar, in axialer Richtung mit der Spannhülse 8 verbunden.

Bei kleinen Säulen- oder Koordinaten-Bohrungen 2 innerhalb des Werkstückes 3 ist dementsprechend auch der Außendurchmesser der verwendeten Spannelemente 5 angepaßt. Auch die Spannschraube 9 hat dann einen vergleichsweise geringen Durchmesser. Zweckmäßigerweise wird deshalb in Abweichung zu den in den Figuren dargestellten Ausführungsbeispielen für Säulenbohrungen, die beispielsweise einen geringeren Durchmesser als 20 mm haben, Spannelemente verwendet, bei denen das Befestigungsteil 7 an seinem dem Befestigungsende 10 abgewandten, freien Ende, im Anschluß an den Außenkonus 11 einen Gewindebolzen aufweist. Auf diesen kann dann eine die Spannhülse 8 beaufschlagende Spannmutter aufgeschraubt werden. Der Gewindebolzen kann dabei ohne weitere Schwächungsstellen ausgebildet sein und ist somit entsprechend höher belastbar. Auch bei dieser Ausführungsform sind zwischen der Spannmutter und der Spannhülse axial wirkende Verbindungsmittel vorgesehen, um beim Lockern der Spannmutter die Spannhülse mitzunehmen. Dazu kann die Spannmutter an ihrer die Spannhülse 8 beaufschlagenden Stirnseite einen etwa radial nach innen weisenden, in eine Außenringnut der Spannhülse eingreifenden Ringbund aufweisen.

Bei dem Spannelement 5 ergibt sich durch die außen liegende Spannhülse 8 beim Anziehen der Spannschraube 9 gleichzeitig mit der radialen Aufweitbewegung auch eine Bewegung in axialer Richtung und dann ein Niederzugeffekt, durch den das zu haltende Werkstück während des Festspannvorganges einerseits zunehmend kraftschlüssig festgelegt, andererseits aber durch die Axialbewegung auch zu einer es unterstützenden Auflage hin mitgenommen wird. Auch dieser Niederzugeffekt trägt wesentlich mit zu einer in Höhenlage sehr exakten Positionierung des für die Bearbeitung zu haltenden Werkstückes 3 bei.

Das Festspannen mit Hilfe der Spannelemente 5 ergibt auch bei im Durchmesser unterschiedlichen Säulenbohrungen 2 ein exakt gleiches Positionieren des Werkstückes 3, da die radiale Aufweitung bezüglich der Längsmittelachse symmetrisch erfolgt. Säulenbohrungen haben häufig Untermaß, damit nach der Bearbeitung der Formplatten und einem Härtevorgang ein dabei auftretender Härteverzug durch Nachschleifen der Säulenbohrungen ausgeglichen werden kann. Die Spannelemente 5 sind so bemessen, daß sie solche Maßtoleranzen gut ausgleichen können. Die radiale Aufweitung kann dabei im Bereich von einigen Zehntel-Millimetern liegen. Dazu kann der Konuswinkel beispielsweise 10° betragen. Bei diesem Konuswinkel ist bei dem vorgesehenen Spannweg der Spannschraube 9 die radiale Aufweitung im Zehntel-Millimeter-Bereich bei entsprechender Klemmkraftübertragung möglich.

Die Befestigung der Spannelemente 5 erfolgt durch Einschrauben ihrer Befestigungsteile 7 in die Grundspannplatte 4, ggfs. auch in einem anderen, mit einem Werkzeugmaschinentisch zu verbindungen Halter. Das Befestigungsteil 7 des Spannelementes 5 kann dazu, wie im Ausführungsbeispiel gezeigt, an seinem Befestigungsende 10 einen Gewindebolzen 19 aufweisen.

An diesen schließt sich ein Paßteil 38 an, welches beim Verbinden des Spannelementes 5 mit einer Grundspannplatte 4 in entsprechende Paß-Bohrungen 36 eingreift. Diese Paß-Bohrungen sind koordinatengeschliffen, so daß die darin eingesetzten Spannelemente 5 eine den Säulen- oder Koordinaten-Bohrungen exakt entsprechende Lage haben. Zwischen dem Außenkonus 11 des Befestigungsteiles 7 und dem Paßteil 38 ist ein radial überstehender Ringbund 18 vorgesehen, durch den das Werkstück einerseits auf Abstand zu der Grundspannplatte 4 gehalten ist, so daß auch auf der Unterseite des Werkstückes 3 ein Bearbeitungswerkzeug austreten kann, wenn entsprechend nach unten durchgehende Formhöhlungen od.dgl. eingebracht werden müssen. Andererseits trägt dieser Ringbund 18 mit zu einer stabilen Lagebeibehaltung des Spannelementes auch bei hohen Bearbeitungskräften bei, da unter anderem der wirksame Hebelarm bei Querbelastungen reduziert ist.

An dem Ringbund 18 befinden sich noch Angriffsflächen 41 für einen Schraubenschlüssel, um dem Spannelement beim Verbinden mit der Grundspannplatte einen festen Sitz zu geben. Gegebenenfalls können an dem Ringbund 18 auch radial überstehende Stifte, Radialbohrungen oder Nuten zum Angreifen eines Verdrehwerkzeuges vorgesehen sein.

Die Gewindeverbindung 19/37 zwischen dem Spannelement 5 und der Grundspannplatte ist vorzugsweise so ausgebildet, daß praktisch keine Zentrierkräfte davon ausgehen, da die präzise Lagepositionierung von dem Paßteil 38 und der Paßbohrung 36 übernommen wird. Bei einstückig mit dem Paßteil 38 verbundenem Gewindebolzen 19 ist deshalb z.B. ein Flachgewinde vorgesehen. Gegebenenfalls kann aber auch ein übliches metrisches Gewinde mit vergrößertem Spiel verwendet werden.

Anstatt eines einstückig mit dem Paßteil 38 verbundenen Gewindebolzens 19 bei dem Befestigungsteil 7 des Spannelementes 5 kann auch eine Bohrung, gegebenenfalls eine Gewindebohrung in dem Befestigungsteil 7 bzw. dem Paßteil und ein lose darin eindrehbarer Gewindebolzen vorgesehen sein. Durch einen Querstift kann das in die Bohrung eingreifende Teil gegen Herausdrehen bzw. auch in axialer Richtung gesichert werden, wobei die Befestigung aber so vorgesehen ist, daß zwischen Befestigungsteil 7 und separatem Gewindebolzen noch ein gewisses Spiel verbleibt.

Dadurch wird sichergestellt, daß die exakte Positionierung des Spannelementes 5 von dem in die Paßöffnung 36 oder eine Führungsnut eingreifenden Paßteil 38 unbeeinflußt von der Gewindeverbindung übernommen wird.

Zur Einhaltung einer hohen Lagegenauigkeit der zum Spannelement 5 gehörenden Teile, ist die Spannschraube 9 in dem Befestigungsteil 7 in Längsrichtung geführt. Dazu ist das obere Ende des Außenkonus 11 mit einer Bohrungserweiterung 25 versehen, in die ein Führungsschaftabschnitt 26 der Spannschraube 9 passend eingreift, wie dies gut in Figur 5 erkennbar ist.

Die in Fig. 3 gezeigte Haltevorrichtung 1 weist eine Grundspannplatte 4 auf, an deren Oberseite vier Spannelemente 5 zum Eingreifen in Säulenbohrungen 2 einer hier nicht dargestellten Formplatte 3a vorstehen. Die Grundspannplatte 4 wird ihrerseits mit dem sie unterstützenden Werkzugemaschinentisch 6 verbunden, wobei zur Halterung gegebenenfalls nicht dargestellte Spannpratzen verwendet werden können. Die Grundspannplatte 4 hat auch Befestigungsstellen 22 für in die Spann-Nuten 21 des Maschinentisches 6 eingreifende Nutensteinschrauben.

Zur Positionierung der Grundspannplatte 4 weist diese unterseitig vorstehende Lagefixierungsvorsprünge 20 auf, die durch eine oder mehrere Langsrippen oder durch Dorne gebildet sein können, welche in die Spann-Nuten 21 des Werkzeugmaschinentisches 6 eingreifen. Dadurch ist die Grundspannplatte 4 beim Aufsetzen auf den Werkzeugmaschinentisch 6 bereits längs ausgerichtet und quer dazu fixiert. Somit ist die Haltevorrichtung nach dem Aufsetzen in einer Koordinate bereits exakt festgelegt und anschließend kann z.B. mittels Nutensteinschrauben bei den Befestigungsstellen 22 der Grundspannplatte 4 (Fig. 3) ein Festlegen erfolgen. Die Grundspannplatte 4 weist eine zentrale, zu den Koordinaten-Bohrungen symmetrisch angeordnete Einmeß-Bohrung 23 auf, die nach dem Aufspannen der Grundspannplatte 4 eingemessen wird, wonach die Maschinenkoordinaten genullt werden können. Somit ist auch das lageexakte Aufspannen der Grundspannplatte 4 insgesamt mit vergleichsweise wenig Aufwand verbunden. Anschließend kann die Formplatte auch mit verschiedenen Durchmessern der Koordinaten-Bohrungen, ohne weitere Ausrichtarbeiten aufgenommen und für die Bearbeitung gehalten werden.

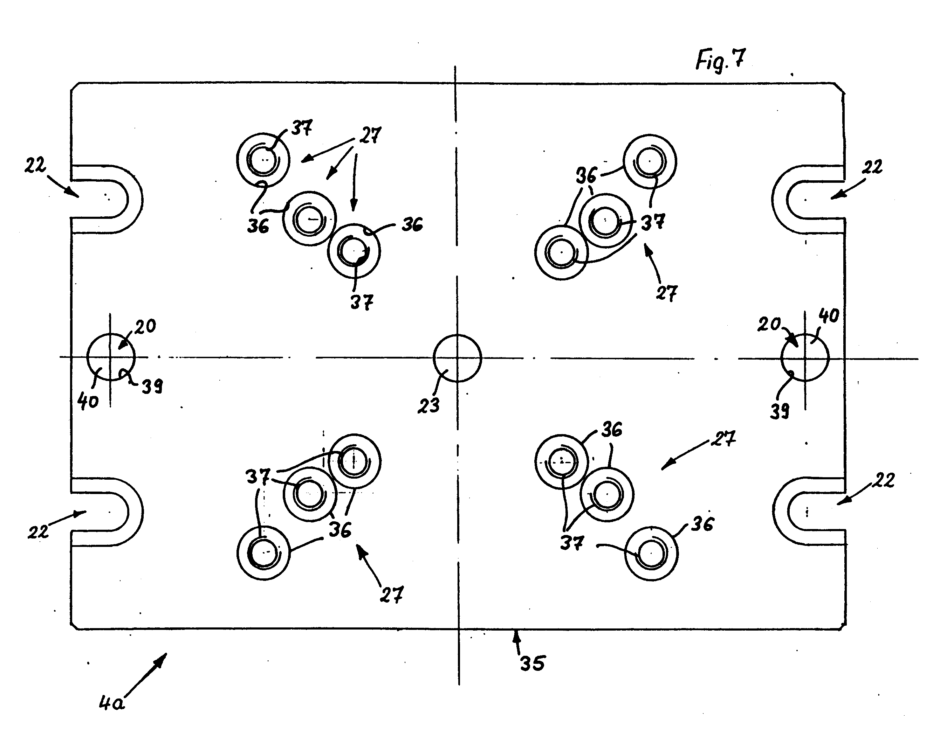

Die Lagefixiervorsprünge 20 können auch durch insbesondere aufweitbare Expansionsdorne 40 (Fig. 7) gebildet sein, die einerseits Bohrungen 39 in der Grundspannplatte durchgreifen und andererseits in die Spann-Nuten 21 des Maschinentisches eingreifen. Ist der Maschinentisch mit einem festen Bohrbild entsprechend dem Abstand und dem Durchmesser der Bohrungen 39 in der Grundspannplatte versehen, so kann durch Einsetzen und Spannen der Expansionsdorne 40 eine exakte Positionierung der Grundspannplatte in beiden Koordinatenrichtungen (x/y) erfolgen. Die Positioniergenauigkeit ist dabei besser als 10 $\mu$m und die Wiederholgenauigkeit beträgt, auch bei mehrmaligem Wechsel weniger als 5 $\mu$m.

Falls die Lagegenauigkeit der vorhandenen Maschinentisch-Spann-Nuten 21 unzureichend sein sollte, können anstatt der Expansionsdorne auch Zentrierstifte mit exzentrischem Zentrierdurchmesser verwendet werden.

Das Aufspannen eines Werkstückes 3 erfolgt dann durch Auflegen auf die Haltevorrichtung 1, wobei die Spannelemente 5 in die im Werkstück 3 vorhandenen Koordinaten-Bohrungen eingreifen. Anschließend erfolgt ein Festlegen des Werkstückes 3 durch radiales Aufweiten der Spannelemente 5, wodurch das Werkstückfür die Bearbeitung kraftschlüssig gehalten ist. Erwähnt sei noch, daß die Haltevorrichtung 1 in der Anzahl ihrer Spannelemente 5 je nach den Erfordernissen variiert werden kann.

Bei der Bearbeitung von Formplatten kann es erforderlich sein, daß nach einer Teilbearbeitung die Formplatte entnommen und der bearbeitete Bereich nachgemessen werden muß.

Beim Wiederaufspannen musste bisher ebenfalls die eingangs beschriebene, umständliche Ausrichtprozedur wiederholt werden, wobei hierbei besonders die Gefahr bestand, daß durch kleinste Verschiebungen Formverzerrungen auftraten. Auch dies wird durch die erfindungsgemäße Haltevorrichtung vermieden, da nach dem Aufsetzen der teilbearbeiteten Formplatte auf die Haltevorrichtung und dem Anziehen der Spannelemente wieder die vorherige, exakte Bearbeitungslage vorhanden ist. Dies macht sich auch vorteilhaft bemerkbar, wenn spiegelbildliche Formhälften mit spiegelbildlichen Schrägbohrungen eingebracht werden müssen. Auch hierbei ist ohne weiteres ein Umspannen der Formplatte und Verdrehen um 180° möglich, so daß ein Umrichten und Einmessen z.B. eines Fräskopfes in entsprechend anderer Richtung nicht mehr erforderlich ist. Auch bleibt dadurch das Abstandmaß zwischen der Spiegelachse und dem jeweiligen Bohrungseintritt exakt beibehalten. Eine Veränderung des Maschinenkopfes (z.B. Fräskopf) ist nicht erforderlich.

Dies ist mit den bisherigen Vorrichtungen wegen der Gefahr von Positionsveränderungen nicht durchführbar. Dabei muß berücksichtigt werden, daß die Genauigkeitsanforderungen beim Formenbau die des allgemeinen Maschinenbaues erheblich, beispielsweise um eine Größenordnung übertreffen. In Versuchen hat sich gezeigt, daß bei der erfindungsgemäßen Haltevorrichtung 1 Wiederholgenauigkeiten bezüglich der Position der Formplatte von weniger als 0,005 mm erreicht werden.

Die Figuren 7 bis 11 zeigen noch Grundspannplatten in unterschiedlichen Ausführungsformen, bei denen die Spannelemente in unterschiedlichen Positionen anbringbar sind, um unterschiedliche Werkstücke bearbeiten zu können, deren Säulen- oder Koordinaten-Bohrungen 2 unterschiedliche Abstände aufweisen.

Gemäß der Ausführungsform nach Fig. 7 sind Befestigungsstellen 27 zum Anbringen von vier Spannelementen 5 in drei unterschiedlichen Positionen vorgesehen. Im übrigen entspricht diese Grundspannplatte 4a der in Fig. 3 gezeigten Grundspannplatte 4. Beim Wechsel des Koordinatensystems auf eine andere Werkstückgröße können die Spannelemente an entsprechende, passende Befestigungsstellen 27 versetzt werden.

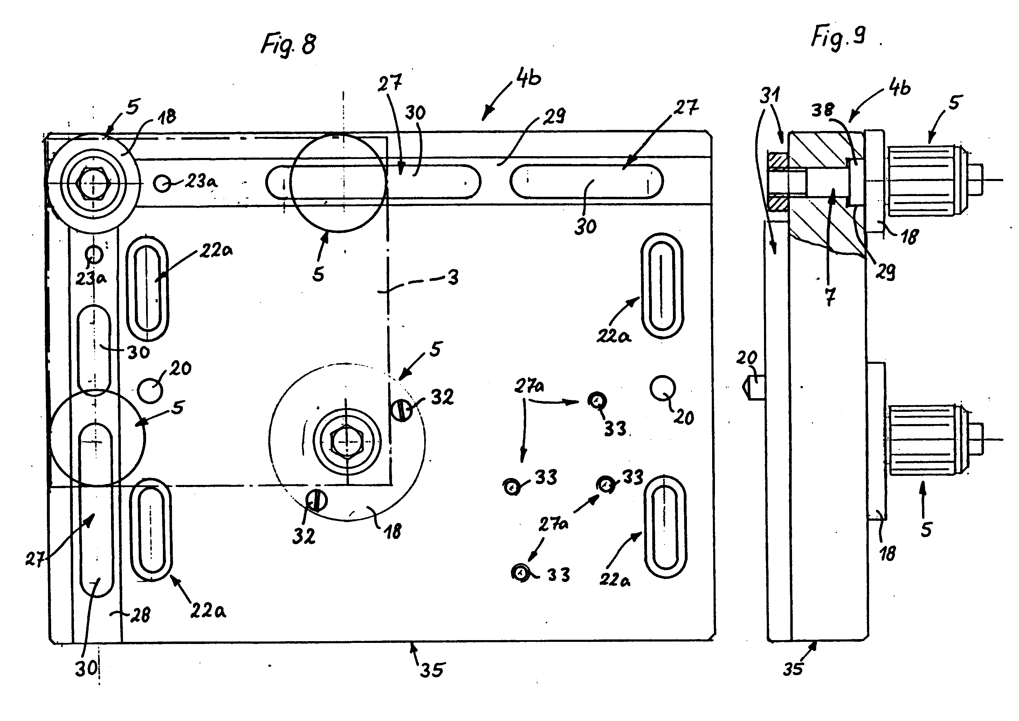

Eine "Universal"-Grundspannplatte 4b zeigen die Figuren 8 u. 9.

Diese Grundspannplatte 4b ist zum Anbringen von bis zu vier Spannelementen 5 vorgesehen. Eines der Spannelemente ist dabei in einem Eckbereich der Grundspannplatte in unveränderbarer Position angebracht, während die anderen drei Spannelemente in unterschiedlichen Lagen an der Grundspannplatte anbringbar sind. Zwei der veränderbaren Spannelemente 5 können bereichsweise stufenlos entlang von in rechtwinkligen Koordinatenrichtungen verlaufenden Längsführungen 28,29, die kantenparallel verlaufen, positioniert werden. Sie greifen dabei mit ihren Befestigungsteilen 7 durch Längsschlitze 30, die sich längs innerhalb der durch Führungsnuten gebildeten Längsführungen 28, 29 befinden. Anstatt von mehreren, hintereinander angeordneten Längsschlitzen 30 könnte auch jeweils ein durchgehender Schlitz in der Längsführung 28 und einer in der Längsführung 29 vorgesehen sein. Aus Festigkeitsgründen ist die Anordnung mehrere Längsschlitze 30 hintereinander vorteilhaft. Die Lage und Länge dieser Längsschlitze 30 ist auf die in der Praxis vorkommenden Säulen- oder Koordinatenbohrungs-Abstände abgestimmt.

Unterseitig weist die Grundspannplatte 4b im Bereich der äußeren Befestigungsstellen für die beiden verschiebbaren Spannelemente 5 Aussparungen 31 auf (vgl. auch Fig. 9) durch die zwischen der Grundspannplatte 4b und einer als Auflage dienende Unterlage, z.B. einem Werkzeugmaschinentisch 6, genügend Platz zum Eingreifen eines Werkzeuges vorhanden ist, mit dem die verschiebbaren Spannelemente 5 fixiert werden können. Durch die randnahe Anordnung der Befestigungsstellen für die verschiebbaren Spannelemente und auch für das im Eck unveränderbar angeordnete Spannelement ist eine gute Zugänglichkeit der Unterseite gegeben. Für das vierte Spannelement 5 ist vorzugsweise eine von oben her zugängliche Befestigung vorgesehen, da dieses Spannelement auch mit größerem Abstand zu den Seitenrändern der Grundspannplatte 4b angeordnet sein kann. Im Ausführungsbeispiel sind mehrere Befestigungsstellen 27a vorgesehen, an denen dieses Spannelement 5 mit der Grundspannplatte 4b verbunden werden kann. Es besteht aber auch hier die Möglichkeit entsprechende Schiebeführungen für ein zumindest bereichsweise stufenloses Positionieren vorzusehen.

Das vierte Spannelement 5 weist in seinem Ringbund 18 Durchgangsbohrungen auf, durch die Befestigungsschrauben 32 durchgreifen und in Gewindebohrungen 33 in der Grundspannplatte 4b bei den Befestigungsstellen 27a einschraubbar sind. Damit diese Befestigungsschrauben 32 auch bei aufgesetztem Werkstück 3 (strichliniert) zugänglich sind, sind sie, bezogen auf die dort befindlichen Werkstückecke, über Eck gegenüberliegend angeordnet. Bedarfsweise kann der Ringbund 18 in Abstimmung an den jeweiligen seitlichen Überstand des Werkstückes über die dort befindliche Bohrung 2, ausgebildet sein.

Die Grundspannplatte 4b weist zum Befestigen beispielsweise an einem Werkzeugmaschinentisch 6 (vgl. Fig. 3) Bohrungen oder vorzugsweise Langlöcher 34 als Befestigungsstellen 22a auf. Diese Langlöcher 34 sind zweckmäßigerweise quer zu den Spann-Nuten 21 des Maschinentisches 6 orientiert, so daß die Grundspannplatte 4b auf einem Maschinentisch positioniert und anschließend festlegbar ist. Die genaue Lagefixierung erfolgt auch hierbei durch an der Unterseite der Grundspannplatte 4b vorstehende Lagefixiervorsprünge 20, die in die Spann-Nuten 21 eingreifen.

Die nahe der Längsführung 28 angeordeten Langlöcher 34 befinden sich wegen der erforderlichen Zugänglichkeit der Unterseite der Befestigungsstellen 27 für die Spannelemente 5, innenseitig neben der Längsführung 28.

Beim Aufspannen einer Formplatte od.dgl. Werkstück auf die Grundspannplatte 4b wird folgendermaßen vorgegangen:

Die drei verstellbaren Spannelemente 5 werden etwa entsprechend den Abständen der Koordinaten- oder Säulenbohrungen 2 des zu bearbeitenden Werkstückes auf die Grundspannplatte 4b aufgelegt. Das im Eck befindliche Spannelemt 5 ist hierbei schon mit der Grundspannplatte 4b verbunden. Anschließend werden die Spannelemente 5 von ihrer Oberseite her angezogen, so daß sie in den Säulenbohrungen festsitzen. Erst dann erfolgt das feste Verbinden der Spannelemente 5 mit der Grundspannplatte 4b. Dies erfolgt bei den beiden äußeren, verschiebbaren Spannelementen von unten her und das vierte Spannelement kann von oben her angezogen werden. Damit ist der gesamte Aufspannvorgang erledigt. Der Formplattenwechsel kann dann, wie bereits vorbeschrieben auf einfache Weise durch Lösen der einzelnen Spannelemente 5 erfolgen.

Erwähnt sei noch, daß in der Grundspannplatte 4b ebenfalls eine oder mehrere Einmeß-Bohrungen 23a vorgesehen sind, die mit fest vorgegebenem Abstand zu dem in seiner Position unveränderbaren, im Eck angeordneten Spannelement angeordnet sind. Durch diese Einmeß-Bohrungen kann ein exakt vorgegebener Koordinatenpunkt in die Bearbeitungsmaschine übernommen werden.

Insbesondere, wenn durch die Lagefixiervorsprünge 20, die in die Spann-Nuten 21 des Werkzeugmaschinentisches 6 eingreifen, keine spielfreie und passgenaue Lagevorgabe der Grundspannplatte gegeben ist, ist es zweckmäßig, wenn eine der Längsstirnseiten der Grundspannplatte eine systemparallele Ausrichtfläche bildet. An dieser Ausrichtfläche 35 kann dann angetastet und die Grundspannplatte exakt ausgerichtet werden.

Die Längsführungen 28, 29 bilden mit ihren Seitenwänden präzise Seitenführungen für die Spannelemente 5, die mit ihrem Befestigungsteil 7 dort eingreifen. Das Befestigungsteil 7 kann, wie z.B. in Fig. 5 erkennbar rund ausgebildet sein, jedoch besteht auch die Möglichkeit hier eine Flachführung und somit gleichzeitig auch eine Verdrehsicherung vorzusehen.

Anstatt in Verbindung mit einer Grundspannplatte können die Spannelemente 5 auch für sich in Verbindung mit Index-Bohrungen 2 aufweisenden Werkstücken 3 vorteilhaft eingesetzt werden. Dazu kann das Befestigungsteil 7 als Steckbolzen ausgebildet sein, der nach dem Einsetzen des Spannelementes 5 in eine Index-Bohrung dann in eine entsprechende Aufnahmebohrung am Werkzeugmaschinentisch 6 eingesetzt werden kann. Anstatt von Aufnahmebohrungen können auch die vorhandenen Spann-Nuten 21 benützt werden, so daß bereits dadurch eine genaue Lagefixierung vorhanden ist. Das Festspannen kann dann wie üblich mit Spannpratzen od.dgl. vorgenommen werden.

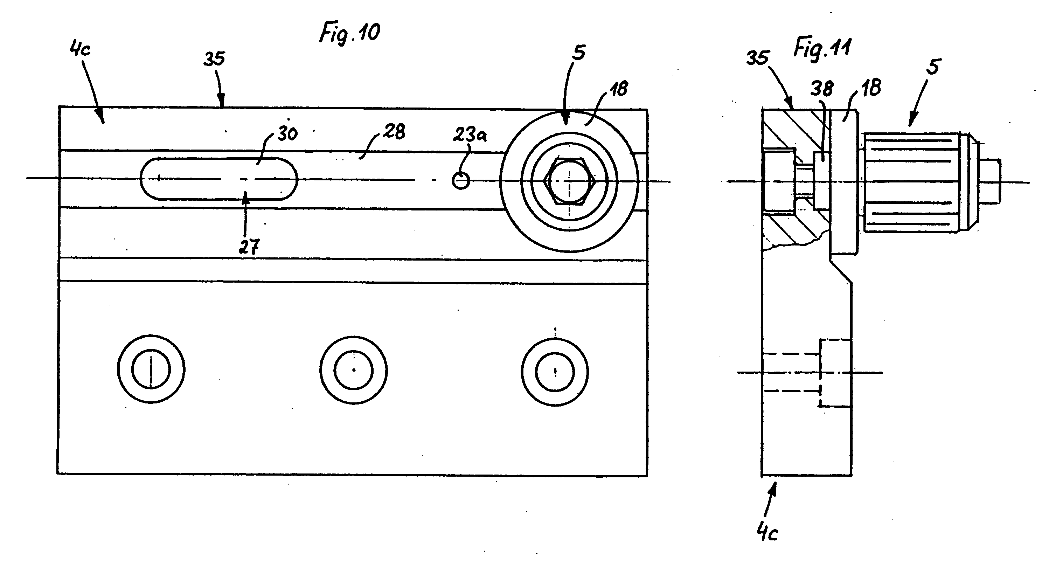

In den Figuren 10 und 11 ist noch eine Grundspannplatte 4c gezeigt, die für zwei Spannelemente 5 vorgesehen ist. Eines dieser Spannelemente ist dabei fest angeordnet und das weitere Spannelement kann in seinem Abstand zu dem ersten in unterschiedlicher Position befestigt werden. Prinzipiell ist hier zum Teil eine mit dem Ausführungsbeispiel nach Fig. 8 und 9 vergleichbare Kontruktion vorhanden.

Die erfindungsgemäße Haltevorrichtung 1 mit den Spannelementen 5 kann bei Verwendung von sog. Palettensystemen zum automatischen Zuführen von Werkstücken zu Bearbeitungsmaschinen auch an der Werkzeugmaschine selbst und/oder am Palettensystem angebracht sein. Damit ist ein automatisches Umsetzen von Werkstücken bei gleichzeitig hoher Positioniergenauigkeit möglich, ohne daß Nachrichtarbeiten erforderlich sind.

Die auf die Grundspannplatte aufsetzbaren, untereinander kompatiblen Palettenplatten sind wie eine Formplatte mit Koordinaten-Bohrungen 2 versehen und können dadurch positionsgenau auf die Grundspannplatte aufgesetzt und gehalten und auch gewechselt werden. Auf solchen Palettenplatten sind Befestigungsstellen für Aufspannteile, z.B. einen Schraubstock, eine Magnetplatte, Erodierelektroden od.dgl. vorgesehen.

Die verschiedenen Aufspannteile für die Palettenplatten sind auf diesen koordinatengerecht, z.B. mit Paßbohrungen und Expandierdornen befestigt, so daß auch hier ein schnelles und lageexaktes Umrüsten möglich ist.

Die Palettenplatten können, wie die Grundspannplatte, eine Einmeß-Bohrung 23 haben, welche mit der Einmeß-Bohrung der Grundspannplatte bezüglich ihrer Position zu den Koordinaten-Bohrungen 2 übereinstimmt. An der Einmeß-Bohrung der aufgespannten Palettenplatte können die Maschinenkoordinaten genullt werden.

Erwähnt sei noch, daß auf eine aufgespannte Palettenplatte auch eine oder mehrere andere Palettenplatten koordinatengerecht aufgespannt werden können, um ohne zusätzliche Rüstarbeiten z.B. von einem Haltesystem auf ein anderes übergehen zu können. Die Verbindung erfolgt dabei vorzugsweise über Expansionsdorne.

Die erfindungsgemäße Haltevorrichtung 1 kann ganz allgemein zum Halten von Werkstücken während der Bearbeitung verwendet werden. Dabei ist insbesondere auch ein Einsatz bei der Bearbeitung von Stanzwerkzeugen möglich, da diese Stanzwerkzeuge ebenfalls Koordinaten- oder Säulenbohrungen wie die Formplatten aufweisen.

Auch beim Herstellen von Auswerferplatten für Spritzgußwerkzeuge kann die Haltevorrichtung 1 verwendet werden. Dabei werden auf die Grundspannplatte zwei Spannleisten oder eine Spannplatte mit Aufnahmebohrungen 2 aufgesetzt und befestigt. Zwischen die Spannleisten wird dann das zu bearbeitende Werkstück, im vorliegenden Falle die Auswerferplatte eingesetzt, wobei sie in eingeformte Auflagen der Spannleiste eingreifen. Zur Lagefixierung in Längsrichtung ist noch ein Anschlag vorgesehen. Gehalten werden die Auswerferplatten dann durch Spannpratzen oder dergleichen. Anschließend erfolgt das Einbringen von Auswerferbohrungen in exakt der gleichen Lage, wie dies später auch an der Formplatte der Fall ist. Insbesondere ergibt sich dadurch der Vorteil, daß bei der späteren Bearbeitung der Formplatte genau gleiche Verhältnisse vorhanden sind, da auch diese Platte über ihre Koordinatenbohrungen mit Hilfe der Spannelemente 5 gehalten ist. Die Auswerferplatte hat bei der Bearbeitung die gleiche Position wie später im Spritzgußwerkzeug mit entsprechend lagegenauer Zuordnung. Vorteilhaft ist weiterhin, daß beim Wechseln von einem Werkstück zum anderen das Haltesystem oder die Haltevorrichtung nicht jeweils abgebaut werden muß, sondern für beide Werkstücke jeweils benutzt werden kann.

Insgesamt erreicht man durch die vorbeschriebene Haltevorrichtung 1 eine erhebliche Rationalisierung insbesondere im Formen- und Werkzeugbau, die insbesondere auch durch eine Reduzierung der Rüstzeiten bei gleichzeitig hoher Positionier- und Wiederholgenauigkeit erreicht wird. Zusammengefasst sind insbesondere folgende Vorteile vorhanden:
- Rüstzeitreduzierung,
- erhebliche Senkung der Stillstandzeiten,
- koordinatengenaues Spannen des Werkstükkes mit hoher Genauigkeit,
- schnelles Abspannen z.B. für Zwischenarbeitsgänge bei Anpassung von Spiegelsitzen (Tuschierflächen),
- ein Maschinenumrüsten bei der Bearbeitung von Schrägstiftbohrungen entfällt; das Werkstück wird nur um 180° gedreht,
- höhere Genauigkeit der Werkstücke,
- höhere Genauigkeit der Senkelektroden,
- bei Konstruktionsunklarheiten kann am nächsten Werkstück weitergearbeitet werden.

**Patentansprüche**

1. Haltevorrichtung zum Festspannen einer Formplatte od.dgl. Platte, die Säulen- oder Koordinaten-Bohrungen aufweist, während der Bearbeitung auf einer spanabhebenden Werkzeugmaschine, wobei die Haltevorrichtung eine Grundspannplatte (4) sowie daran befestigt wenigstens zwei in Bohrungen des Werkstückes eingreifende, ein Innenteil (7) und ein Außenteil (8) aufweisende Spannelemente (5) hat, die durch eine axiale Bewegung und mittels Konusflächen radial und konzentrisch aufweitbar sind, **dadurch gekennzeichnet,** daß die Befestigungsstellen (27) in der Grundspannplatte (4) als Paß-Öffnungen (36) mit sich daran anschließender Gewindebohrung (37) ausgebildet sind, in welche die Spannelemente (5) mit einem Gewindeabschnitt (19) sowie einem Paßteil (38) einsetzbar sind, daß sich an das Paßteil (38) ein Ringbund (18) einstückig anschließt, über den ein Außenkonusteil (11) vorsteht, daß zum Halten und axialen Verstellen des Außenteiles des Spannelementes eine Verschraubung vorgesehen ist, deren mittels ihres Gewindes zum Spannen und Lösen bewegbares Teil in beiden axialen Bewegungsrichtungen mit dem Außenteil formschlüssig verbunden ist.

2. Haltevorrichtung nach Anspruch 1, dadurch gekennzeichnet, daß die Grundspannplatte (4) wenigstens eine Einmeß Bohrung (23) aufweist.

3. Haltevorrichtung nach Anspruch 2, dadurch gekennzeichnet, daß eine Einmeß-Bohrung (23) zentral zwischen den Säulen-oder Koordinaten-Bohrungen (2) mit gleichen Abständen sowie parallel zu diesen angeordnet ist.

4. Haltevorrichtung nach einem oder mehreren der Ansprüche 1 bis 3, dadurch gekennzeichnet, daß die Grundspannplatte (4a, 4b, 4c) mehrere Befestigungsstellen (27) zum Befestigen von Spannelementen (5) in unterschiedlichen Abständen voneinander aufweisen.

5. Haltevorrichtung nach einem oder mehreren der Ansprüche 1 bis 4, dadurch gekennzeichnet, daß mehrere gegeneinander austauschbare und/oder übereinander setzbare Grundspannplatten mit unterschiedlichen Außenabmessungen und/oder Säulen- oder Koordinaten-Bohrbildern vorgesehen sind.

6. Haltevorrichtung nach einem oder mehreren der Ansprüche 1 bis 5, dadurch gekennzeichnet, daß die Paß-Öffnungen (36) bei den Befestigungsstellen (27) der Grundspannplatte (4a) als Paßbohrungen (36) ausgebildet sind.

7. Haltevorrichtung nach einem oder mehreren der Ansprüche 1 bis 6, dadurch gekennzeichnet, daß die Grundspannplatte (4, 4a) an einer ihrer Längsstirnseiten eine systemparallele Ausrichtfläche (35) aufweist.

8. Haltevorrichtung nach einem oder mehreren der Ansprüche 1 bis 7, dadurch gekennzeichnet, daß die Grundspannplatte (4, 4a) über ihre Unterseite vorstehende Lagefixiervorsprünge (20), insbesondere zum Eingreifen in Spann-Nuten (21) oder Referenzbohrungen eines Werkzeugmaschinentisches (6) aufweist.

9. Haltevorrichtung nach Anspruch 8, dadurch gekennzeichnet, daß für die Lagefixiervorsprünge (20) Bohrungen (39) in der Grundspannplatte (4, 4a) vorgesehen sind und daß die Lagefixiervorsprünge durch Dorne (40), vorzugsweise radial aufweitbare Dorne gebildet sind.

10. Haltevorrichtung nach einem oder mehreren der Ansprüche 1 bis 9, dadurch gekennzeichnet, daß der Außenkonusteil (11) des Spannelementes (5) einstückig mit dem Paßteil (38) sowie dem Ringbund (18) verbunden ist.

11. Haltevorrichtung nach einem oder mehreren der Ansprüche 1 bis 10, dadurch gekennzeichnet, daß das Außenkonusteil (11) an seinem dem Befestigungsende (10) des Spannelementes (5) abgewandten freien Ende einen sich zu diesem verjüngenden Außenkonus (11) und die Spannhülse (8) einen entsprechenden Innenkonus (12) hat und daß die Spannhülse durch Verschieben in axialer Richtung zum Befestigungsende hin radial aufweitbar ist.

12. Haltevorrichtung nach einem oder mehreren der Ansprüche 1 bis 11, dadurch gekennzeichnet, daß eine die Spannhülse (8) durchgreifende und in eine Gewindebohrung (15) des Befestigungsteiles (7) einschraubbare, die Spannhülse (8) beaufschlagende Spannschraube (9) vorgesehen ist, die einen in eine Innenringnut (16) der Spannhülse (8) eingreifenden Ringansatz (17) aufweist.

13. Haltevorrichtung nach einem oder mehreren der Ansprüche 1 bis 11, dadurch gekennzeichnet, daß das Befestigungsteil (7) an seinem dem Befestigungsende (10) abgewandten freien Ende im Anschluß an den Außenkonus (11) einen Gewindebolzen aufweist, und daß eine auf diesen aufschraubbare, die Spannhülse (8) beaufschlagende Spannmutter vorgesehen ist, die einen in eine Außenringnut der Spannhülse (8) eingreifenden Ringbund für eine Verbindung von Spannmutter und Spannhülse (8) in axialer Richtung aufweist.

14. Haltevorrichtung nach einem oder mehreren der Ansprüche 1 bis 12, dadurch gekennzeichnet, daß für die Spannschraube (9) in dem Außenkonus (11) des Befestigungsteils (7) eine Längsschiebeführung (24) vorgesehen ist, vorzugsweise durch eine am äußeren Ende der Gewindebohrung (15) sich anschließende Bohrungserweiterung (25) sowie einen in diese Erweiterung (25) passenden Führungsschaftabschnitt (26) der Spannschraube (9).

15. Haltevorrichtung nach einem oder mehreren der Ansprüche 1 bis 14, dadurch gekennzeichnet, daß die in axialer Richtung geschlitzte Spannhülse (8) mehrere, insbesondere in Umfangsrichtung abwechselnd von den beiden Stirnseiten ausgehende Längsschlitze (14) aufweist.

16. Haltevorrichtung nach einem oder mehreren der Ansprüche 1 bis 15, dadurch gekennzeichnet, daß die Grundspannplatte (4, 4a, 4b, 4c) Basisplatte einer oder mehrerer Palettenplatten ist und daß die Palettenplatten vorzugsweise durch Koordinaten-Bohrungen gebildete Befestigungsstellen für sich selbst und für Aufspannteile, z. B. einen Schraubstock, eine Magnetspannplatte, Erodierelektroden od.dgl. aufweist (aufweisen).

17. Haltevorrichtung nach einem oder mehreren der Ansprüche 1 bis 16, dadurch gekennzeichnet, daß der sich an das Paßteil (38) des Spannelementes (5) anschließende Gewindeabschnitt (19) Radialspiel zu dem Paßteil (38) hat.

18. Haltevorrichtung nach Anspruch 17, dadurch gekennzeichnet, daß in dem Paßteil (38) eine Übermaß gegenüber einem Einsetzteil des Gewindeabschnittes aufweisende Aufnahmebohrung sowie eine Verdrehsicherung und eine Sicherung in axialer Richtung vorgesehen sind, daß dazu vorzugsweise wenigstens ein das Einsetzteil und das Paßteil durchsetzender Querstift od.dgl. vorgesehen ist und daß vorzugsweise die in dem Einsetzteil vorhandene Bohrung für den Querstift od.dgl. mit Bewegungsspiel bemessen ist.

19. Haltevorrichtung nach einem oder mehreren der Ansprüche 1 bis 16, dadurch gekennzeichnet, daß der Gewindeabschnitt (19) einstückig mit dem Paßteil verbunden ist und daß ein weitgehend zentrierwirkungsfreies Gewinde, insbesondere ein Flachgewinde od.dgl. vorgesehen ist.

20. Haltevorrichtung nach einem oder mehreren der Ansprüche 1 bis 19, dadurch gekennzeichnet, daß der Konuswinkel des Außenkonus (11) bzw. des Innenkonus (12) wenigstens etwa 1° vorzugsweise 10° oder gegebenenfalls mehr beträgt.

21. Haltevorrichtung nach einem oder mehreren der Ansprüche 1 bis 20, dadurch gekennzeichnet, daß ein Spannelement (5) in unveränderter Position, vorzugsweise nahe in einem Eckbereich der Grundspannplatte (4b) und weitere Spannelemente (5) in unterschiedlichen Positionen an der Grundspannplatte anbringbar sind.

22. Haltevorrichtung nach Anspruch 17, dadurch gekennzeichnet, daß zumindest ein, vorzugsweise zwei Spannelemente (5) wenigstens bereichsweise stufenlos entlang von in rechtwinkligen Koordinatenrichtungen verlaufenden Längsführungen (28, 29) der Grundspannplatte (4b) positionier bar sind.

23. Haltevorrichtung nach Anspruch 22, dadurch gekennzeichnet, daß die Längsführungen (28, 29) durch oberseitig in der Grundspannplatte (4b, 4c) befindliche Führungsnuten für die Paßteile (38) der Spannelemente (5) gebildet sind, daß der Nutengrund eine oder mehrere Längsschlitze (39) zum Durchgreifen des Befestigungsteiles (7) eines Spannelementes aufweisen und daß insbesondere der Schnittpunkt der Längsführungen (28, 29) im Mittelpunkt der Befestigungsstellen für das unveränderbare Spannelement (5) liegt.

24. Haltevorrichtung nach einem oder mehreren der Ansprüche 1 bis 23, dadurch gekennzeichnet, daß die Grundspannplatte (4b, 4c) im Bereich der Befestigungsstellen (27) für Spannelemente (5) mit unterseitiger Befestigung, insbesondere randoffene Aussparungen (31) zum Eingreifen eines Werkzeuges eingreift.

25. Haltevorrichtung nach einem oder mehreren der Ansprüche 1 bis 24, dadurch gekennzeichnet, daß bei vier Spannelementen (5) eines unveränderbar in einem Eckbereich der Grundspannplatte (4b), zwei in kantenparallelen, von diesem Eckbereich ausgehenden Längsführungen (28, 29) verstellbar und das vierte Spannelement (5) innerhalb der Grundspannplatten-Ebene verstellbar angeordnet sind.

26. Haltevorrichtung nach Anspruch 25, dadurch gekennzeichnet, daß das vierte Spannelement (5) von der Oberseite der Grundspannplatte zugängliche Befestigungsstellen aufweist, vorzugsweise seinen Ringbund (18) durchgreifende und in Gewindebohrungen (33) der Grundspannplatte (4b) einschraubbare Befestigungsschrauben (32).

27. Haltevorrichtung nach Anspruch 26, dadurch gekennzeichnet, daß die den Ringbund (18) od.dgl. des Spannelementes (5) durchgreifenden Befestigungsschrauben (32) bei aufgesetztem Werkstück (3) frei zugänglich sind und insbesondere, bezogen auf die dort befindliche Werkstückecke, über Eck gegenüberliegend angeordnet sind.

28. Haltevorrichtung nach einem der Ansprüche 1 bis 27, dadurch gekennzeichnet, daß die Befestigungsstellen (22a) zum Befestigen der Grundspannplatte (4) als Langlöcher (34) ausgebildet sind, insbesondere als quer zu den Spann-Nuten (21) des Maschinentisches (6) verlaufende Langlöcher.

## Claims

1. A device for clamping a platen for use in moulding or a like plate having column or coordinate holes, during machining on a cutting machine tool, the clamping device having a base clamping plate (4) as well as fixed thereto at least two clamping elements (5) which engage with holes in the workpiece and have an internal member (7) and an external member (8), said clamping elements being expandible radially and concentrically through an axial movement and by means of cone faces, **characterized in that** the fastening locations (27) in the base clamping plate (4) take the form of fitting openings (36) with adjoining tapped hole (37) in which the clamping elements (5) are insertable with a threaded portion (19) as well as a fitting piece (38), that integrally adjoined to the fitting piece (38) is a collar (18) above which an outer cone part (11) projects, that for holding and axially adjusting the external member of the clamping element a screwed connection is provided, that part of the screwed connection which is threadedly movable for clamping and unclamping being form-lockingly connected to the external member in both axial directions of movement.

2. A clamping device as claimed in claim 1, characterized in that the base clamping plate (4) has at least one calibration hole (23).

3. A clamping device as claimed in claim 2, characterized in that a calibration hole (23) is arranged centrally between the column or coordinate holes (2) so as to be equidistant and parallel thereto.

4. A clamping device as claimed in one or more of claims 1 to 3, characterized in that the base supporting plate (4a, 4b, 4c) has a plurality of fastening locations (27) for fixing clamping elements (5) at different spacings from one another.

5. A clamping device as claimed in one or more of claims 1 to 4, characterized in that a plurality of base clamping plates having different external dimensions and/or column or coordinate hole patterns are provided and are interchangeable and/or adapted to be placed upon one another.

6. A clamping device as claimed in one or more of claims 1 to 5, characterized in that the fitting openings (36) at the fastening locations (27) of the base clamping plate (4a) take the form of fitting bores (36).

7. A clamping device as claimed in one or more of claims 1 to 6, characterized in that the base clamping plate (4, 4a) has at one of the longitudinal end faces thereof a system-parallel aligning-face (35).

8. A clamping device as claimed in one or more of claims 1 to 7, characterized in that the base clamping plate (4, 4a) has protruding beyond the underside thereof locating projections (20), particularly for engaging with T-slots (21) or reference holes of a machine tool table (6).

9. A clamping device as claimed in claim 8, characterized in that the base clamping plate (4, 4a) is provided with holes (39) for the locating projections (20) and that the locating projections are formed by mandrels (40), preferably radially expandible mandrels.

10. A clamping device as claimed in any one or more of claims 1 to 9, characterized in that the outer cone part (11) of the clamping element (5) is integrally connected to the fitting piece (38) and the collar (18).

11. A clamping device as claimed in one or more of claims 1 to 10, characterized in that the outer cone part (11) has at the free end thereof averted from the fixing end (10) of the clamping element (5) an outer cone (11) tapering to said free end and the clamping sleeve (8) has a corresponding inner cone (12) and that the clamping sleeve (8) is radially expandible by moving in the axial direction towards the fixing end.

12. A clamping device as claimed in one or more of claims 1 to 11, characterized in that a clamping screw (9) is provided applied to the clamping sleeve (8), said clamping screw penetrating said clamping sleeve and being adapted to be screwed into a tapped hole (15) of the fixing part (7) and further having an annular shoulder (17) engaging with an inner annular groove (16) of the clamping sleeve (8).

13. A clamping device as claimed in one or more of claims 1 to 11, characterized in that the fixing part (7) has at the free end thereof averted from the fixing end (10) a threaded stud which adjoins the outer cone (11) and onto which a clamping nut applied to the clamping sleeve (8) can be screwed, said clamping nut having a collar which engages with an outer annular groove of the clamping sleeve (8) and serves for a connection of clamping nut and clamping sleeve (8) in the axial direction.

14. A clamping device as claimed in one or more of claims 1 to 12, characterized in that a longitudinal slideway (24) is provided for the clamping screw (9) in the outer cone (11) of the fixing part (7), preferably through a widening (25) adjoining the outer end of the tapped hole (15) and a guide shank portion (26) of the clamping screw (9) fitting in said widening (25).

15. A clamping device as claimed in one or more of claims 1 to 14, characterized in that the clamping sleeve (8) slotted in the axial direction has a plurality of longitudinal slots (14), particularly ones departing in the circumferential direction alternately from the two end faces.

16. A clamping device as claimed in one or more of claims 1 to 15, characterized in that the base clamping plate (4, 4a, 4b, 4c) is the foundation plate of one or a plurality of pallets and that the pallet(s) has (have) fastening locations preferably formed by coordinate holes for it(them)selves and for attachments, e.g. a vice, a magnetic holding plate, erosion electrodes or the like.

17. A clamping device as claimed in one or more of claims 1 to 16, characterized in that the threaded portion (19) adjoining the fitting piece (38) of the clamping element (5) has a radial clearance to the fitting piece (38).

18. A clamping device as claimed in claim 17, characterized in that in the fitting piece (38) a locating hole is provided oversized in relation to an insert of the threaded portion, as well as an anti-rotation means and a device for safety in the axial direction, that for this purpose preferably at least one transverse pin or the like is provided traversing the insert and the fitting piece and that preferably the hole for the transverse pin or the like in the insert is dimensioned with clearance of motion.

19. A clamping device as claimed in one or more of claims 1 to 16, characterized in that the threaded portion (19) is integrally connected to the fitting piece and that a thread largely free of centring action, particularly a square thread or the like, is provided.

**20.** A clamping device as claimed in one or more of claims 1 to 19, characterized in that the cone angle of the outer cone (11) and of the inner cone (12) is at least about 1°, preferably 10° or possibly more.

**21.** A clamping device as claimed in one or more of claims 1 to 20, characterized in that one clamping element (5) is attachable in an unchanged position, preferably near a corner area of the base clamping plate (4b) and further clamping elements (5) are attachable to the base clamping plate in different positions.

**22.** A clamping device as claimed in claim 17, characterized in that at least one, preferably two clamping elements (5) are positionable steplessly at least in some areas along longitudinal guides (28, 29) of the base clamping plate (4b), said guides running in rectangular coordinate directions.

**23.** A clamping device as claimed in claim 22, characterized in that the longitudinal grooves (28, 29) are composed by guide grooves which serve for the fitting pieces (38) of the clamping elements (5) and are situated in the upper side of the base clamping plate (4b, 4c), that the groove bases have one or more longitudinal slots (39) for penetration of the fiting part (7) of a clamping element and that in particular the point of intersection of the longitudinal guides (28, 29) lies in the centre point of the fastening locations for the unchangeable clamping element (5).

**24.** A clamping device as claimed in any one or more of claims 1 to 23, characterized in that in the area of the fastening locations (27) for clamping elements (5) with fixation from the underside, the base clamping plate (4b, 4c) has in particular open-ended recesses (31) for application of a tool.

**25.** A clamping device as claimed in any one or more of claims 1 to 24, characterized in that in the case of four clamping elements (5), one is arranged unchangeably in a corner area of the base clamping plate (4b), two are arranged adjustably in longitudinal guides (28, 29) which depart from said corner area and are parallel to the edges and the fourth clamping element (5) is adjustably arranged within the plane of the base clamping plate.

**26.** A clamping device as claimed in claim 25, characterized in that the fourth clamping element (5) has fastening locations accessible from the upper side of the base clamping plate, preferably fastening screws (32) which penetrate the collar (18) of said element and are adapted to be screwed into tapped holes (33) of the base clamping plate (4b).

**27.** A clamping device as claimed in claim 26, characterized in that the fastening screws (32) penetrating the collar (18) or the like of the clamping element (5) are freely accessible when the workpiece (3) is placed and in particular their arrangement in relation to the workpiece corner there is such that they are diagonally opposed.

**28.** A clamping device as claimed in any one of claims 1 to 27, characterized in that the fastening locations (22a) for fixing the base clamping plate (4) take the form of slots (34), particularly slots running transversely to the T-slots (21) of the machine table (6).

**Revendications**

**1.** Dispositif de maintien pour abloquer une plaque-modèle ou une plaque analogue présentant des alésages à colonnes ou à coordonnées pendant l'usinage sur une machine-outil à enlèvement de copeaux, dispositif de maintien qui comprend une plaque d'ablocage de base (4) ainsi qu'au moins deux éléments d'ablocage (5) fixés à cette plaque de base, comportant une partie intérieure (7) et une partie extérieure (8) et s'engageant dans des alésages de la pièce à usiner, éléments qui peuvent être élargis radialement et concentriquement par un mouvement axial et au moyen de surfaces coniques, caractérisé en ce que les points de fixation (27) prévus dans la plaque de base (4) sont réaiisés comme des ouvertures d'ajustage (36) auxquelles se raccorde un trou taraudé (37), dans lesquels les éléments d'ablocage (5) peuvent être mis en place par un tronçon fileté (19) ainsi qu'un segment d'ajustage (38), qu'une collerette annulaire (18) se raccorde d'un seul tenant au segment d'ajustage (38), au-dessus de laquelle fait saillie une partie à cône extérieur (11) et que, pour le maintien et le réglage axial de la partie extérieure de l'élément d'ablocage, on a prévu un assemblage à vis dont la partie déplaçable par son filetage, pour l'ablocage et le desserrage, est reliée à la partie extérieure, dans les deux sens de mouvement axial, par une liaison par imbrication de formes.

**2.** Dispositif de maintien selon la revendication 1, caractérisé en ce que la plaque d'ablocage de base (4) présente au moins un alésage d'étalonnage (23).

3. Dispositif de maintien selon la revendication 2, caractérisé en ce qu'un alésage d'étalonnage (23) est disposé au centre à égales distances entre les alésages à colonnes ou à coordonnées (2) et parallèlement à ces alésages.

4. Dispositif selon une ou plusieurs des revendications 1 à 3, caractérisé en ce que la plaque d'ablocage de base (4a, 4b, 4c) présente plusieurs points de fixation (27) permettant de fixer des éléments d'ablocage (5) à différentes distances les uns des autres.

5. Dispositif de maintien selon une ou plusieurs des revendications 1 à 4, caractérisé en ce que plusieurs plaques d'ablocage de base sont prévues, qui peuvent être interchangées et/ou superposées et possèdent des dimensions extérieures différentes et/ou des agencements d'alésages à colonnes ou à coordonnées différents.

6. Dispositif de maintien selon une ou plusieurs des revendications 1 à 5, caractérisé en ce que les ouvertures d'ajustage (36) des points de fixation (27) de la plaque de base (4a) sont réalisées comme des alésages d'ajustage (36).

7. Dispositif de maintien selon une ou plusieurs des revendications 1 à 6, caractérisé en ce que la plaque de base (4, 4a) présente une face d'alignement (35) parallèle au système sur l'un des côtés longitudinaux de sa tranche.

8. Dispositif de maintien selon une ou plusieurs des revendications 1 à 7, caractérisé en ce que la plaque de base (4, 4a) présente des saillies (20) de fixation de position qui dépassent de sa face inférieure et sont destinées en particulier à pénétrer dans des rainures d'ablocage (21) ou des alésages de référence de la table (6) d'une machine-outil.

9. Dispositif de maintien selon la revendication 8, caractérisé en ce que des alésages (39) sont prévus dans la plaque de base (4, 4a) pour les saillies (20) de fixation de position et que ces saillies sont formées par des mandrins (40), de préférence des mandrins pouvant être élargis radialement.

10. Dispositif de maintien selon une ou plusieurs des revendications 1 à 9, caractérisé en ce que la partie à cône extérieur (11) de l'élément d'ablocage (5) est reliée d'un seul tenant au segment d'ajustage (38) ainsi qu'à la collerette annulaire (18).

11. Dispositif de maintien selon une ou plusieurs des revendications 1 à 10, caractérisé en ce que la partie à cône extérieur (11) possède un cône extérieur (11) à son extrémité libre éloignée de l'extrémité de fixation (10) de l'élément d'ablocage (5), cône qui se rétrécit vers cette extrémité libre, et le manchon de serrage (8) possède un cône intérieur (12) correspondant, et que le manchon de serrage peut être élargi radialement par son déplacement axial en direction de l'extrémité de fixation.

12. Dispositif de maintien selon une ou plusieurs des revendications 1 à 11, caractérisé en ce que l'élément d'ablocage comprend une vis de serrage (9) passant à travers le manchon de serrage (8) et pouvant être vissée dans un trou taraudé (15) de la partie de fixation (7), vis qui agit sur le manchon (8) et présente une saillie annulaire (17) engagée dans une gorge annulaire intérieure (16) du manchon (8).

13. Dispositif de maintien selon une ou plusieurs des revendications 1 à 11, caractérisé en ce que la partie de fixation (7) présente une tige filetée à son extrémité libre éloignée de l'extrémité de fixation (10), à la suite du cône extérieur (11), et que l'élément d'ablocage comprend un écrou de serrage pouvant être vissé sur cette tige filetée et agissant sur le manchon de serrage (8), écrou qui possède un collet annulaire pénétrant dans une gorge annulaire extérieure du manchon de serrage (8) en vue de l'établissement d'une liaison axiale entre l'écrou et le manchon (8).

14. Dispositif de maintien selon une ou plusieurs des revendications 1 à 12, caractérisé en ce qu'un guidage (24) pour le coulissement longitudinal de la vis de serrage (9) est prévu dans le cône extérieur (11) de la partie de fixation (7), guidage qui est formé de préférence par une partie d'alésage élargie (25) se raccordant à l'extrémité extérieure du trou taraudé (15), ainsi que par un tronçon de tige (26) de la vis de serrage (9) formant guide et s'ajustant dans cette partie élargie (25).

15. Dispositif de maintien selon une ou plusieurs des revendications 1 à 14, caractérisé en ce que le manchon de serrage (8) fendu en direction axiale, présente plusieurs fentes longitudinales (14) qui partent des deux extrémités du manchon, en particulier de façon alternante dans le sens circonférentiel.

16. Dispositif de maintien selon une ou plusieurs des revendications 1 à 15, caractérisé en ce que la plaque d'ablocage de base (4, 4a, 4b, 4c) constitue la plaque de base d'une ou de plusieurs plaques-palettes et que les plaques-palettes présentent de préférence des points de fixation, formés de préférence par des alésages à coordonnées, pour elles-mêmes et pour des organes à fixer, par exemple pour un étau, un plateau d'ablocage magnétique, des électrodes d'électroérosion ou analogues.

17. Dispositif de maintien selon une ou plusieurs des revendications 1 à 16, caractérisé en ce que le tronçon fileté (19) se raccordant au segment d'ajustage (38) de l'élément d'ablocage (5) présente du jeu radial par rapport à ce segment d'ajustage (38).

18. Dispositif de maintien selon la revendication 17, caractérisé en ce que le segment d'ajustage (38) est pourvu d'un perçage récepteur qui est surdimensionné par rapport à la partie qu'il est destiné à recevoir du tronçon fileté, ainsi que d'un dispositif empêchant la rotation et d'une Sûreté en direction axiale, que ce dispositif et cette sûreté sont formés de préférence par au moins une goupille transversale ou analogue traversant ladite partie du tronçon fileté et le segment d'ajustage, et que, de préférence, le trou ménagé dans ladite partie du tronçon fileté pour le passage de la goupille transversale ou analogue, est dimensionné avec du jeu permettant un mouvement.

19. Dispositif de maintien selon une ou plusieurs des revendications 1 à 16, caractérisé en ce que le tronçon fileté (19) est relié d'un seul tenant au segment d'ajustage et qu'il est pourvu d'un filetage n'ayant pratiquement pas d'effet de centrage, en particulier d'un filet droit ou analogue.

20. Dispositif de maintien selon une ou plusieurs des revendications 1 à 19, caractérisé en ce que l'angle de conicité du cône extérieur (11) et du cône intérieur (12) est d'au moins 1° environ et de préférence 10° ou plus éventuellement.

21. Dispositif de maintien selon une ou plusieurs des revendications 1 à 20, caractérisé en ce qu'il comprend un élément d'ablocage (5) pouvant être mis en place à une position invariable, de préférence près d'une zone d'angle de la plaque d'ablocage de base (4b), ainsi que des éléments d'ablocage (5) supplémentaires pouvant être mis en place à différentes positions sur la plaque d'ablocage de base.

22. Dispositif de maintien selon la revendication 17, caractérisé en ce qu'il comprend au moins un et de préférence deux éléments d'ablocage (5) susceptibles d'être positionnés de façon continue, tout au moins par endroits, le long de guidages longitudinaux (28, 29) ménagés dans la plaque d'ablocage de base (4b) et orientés suivant des axes de coordonnées rectangulaires.

23. Dispositif de maintien selon la revendication 22, caractérisé en ce que les guidages longitudinaux (28, 29) sont formés par des rainures de guidage ménagées dans la face supérieure de la plaque d'ablocage de base (4b, 4c) pour les segments d'ajustage (38) des éléments d'ablocage (5), que le fond des rainures présente une ou plusieurs fentes longitudinales (39) pour le passage de la partie de fixation (7) d'un élément d'ablocage et que le point d'intersection des guidages longitudinaux (28, 29) est situé en particulier du centre du point de fixation pour l'élément d'ablocage (5) dont la position n'est pas variable.

24. Dispositif de maintien selon une ou plusieurs des revendications 1 à 23, caractérisé en ce que la face inférieure de la plaque d'ablocage de base (4b, 4c) présente, dans la région des points de fixation (27) pour des éléments d'ablocage (5) à fixation par le bas, des évidements (31), s'ouvrant en particulier dans un bord de la plaque, pour l'engagement d'un outil.

25. Dispositif de maintien selon une ou plusieurs des revendications 1 à 24, caractérisé en ce que, s'il comprend quatre éléments d'ablocage (5), un élément est disposé fixe dans une zone d'angle de la plaque d'ablocage (4b), deux éléments sont disposés réglables en deux guidages longitudinaux (28, 29) parallèles aux bords et partant de cette zone d'angle, et le quatrième élément d'ablocage (5) est disposé réglable dans le plan de la plaque d'ablocage de base.

26. Dispositif de maintien selon la revendication 25, caractérisé en ce que le quatrième élément d'ablocage (5) présente des organes de fixation accessibles depuis le côté supérieur de la plaque d'ablocage de base, de préférence des vis de fixation (32) traversant la collerette annulaire (18) de cet élément et pouvant être vissées dans des trous taraudés (33) de la plaque d'ablocage de base (4b).

27. Dispositif de maintien selon la revendication 26, caractérisé en ce que les vis de fixation (32), traversant la collerette annulaire (18) ou analogue de l'élément d'ablocage (5), sont librement accessibles lorsque la pièce à usiner (3) a été mise en place et sont disposées en particulier l'une en face de l'autre et de part et d'autre de l'angle de la pièce se trouvant à cet endroit.

28. Dispositif de maintien selon une des revendications 1 à 27, caractérisé en ce que les points de fixation (22a) pour la fixation de la plaque d'ablocage de base (4) sont réalisés comme des trous oblongs (34), en particulier comme des trous oblongs orientés transversalement aux rainures d'ablocage (21) de la table (6) de la machine.

Fig.1

Fig.2

Fig.3

Fig.4

Fig.5

Fig.6

Fig. 7

EP 0 310 967 B1

Fig. 8

Fig. 9

EP 0 310 967 B1

Fig.10

Fig.11

EP 0 310 967 B1